# EUROPEAN PATENT APPLICATION

(11) **EP 4 757 089 A1**
(43) Date of publication of application: **10.06.2026**
(21) Application number: 25220947.3
(22) Date of filing: 04.12.2025
(51) Int. Cl.: H02G 5/02, H02G 5/04

(54) **BUSWAY HOLDER BRACKET**

(30) Priority: 04.12.2024 IN 202421095684
(71) Applicant: Vertiv Corporation, Westerville, OH 43082 (US)
(72) Inventor: PIMPALE, MAHESH, 414111 Tal - Nagar, Dist Ahmednagar (IN); TENGINKAI, AJAY, 411027 Pune (IN); REINBOLT, BRAD, Delaware, 43065 (US); SCHULTE, JOE, Delaware, 43015 (US)
(74) Representative: Cousens, Nico

(57) **Abstract**

The present invention provides a busway holder bracket which includes a base member configured to provide foundational support to the busway holder bracket, a longitudinal member extending perpendicularly from the base member to form an upright structural support, a top member extending perpendicularly from the longitudinal member in a direction parallel to the base member, collectively forming a U-shaped configuration with the base member and longitudinal member for supporting lateral busway members, wherein the base member is configured to be interposed in a lateral spacing between the lateral busway members, then angularly displaced along a predefined angle to secure the bracket with the lateral busway members, and a plurality of slots configured on the top member, the slots configured to receive adjustable elements fastened by threaded fasteners to allow adjustment and secure positioning of the busway holder bracket on the mounting surface.

## Description

This application claims priority to and benefit of India Patent Application No. 202421095684, "UNIVERSAL BUSWAY HOLDER BRACKET" and filed December 4, 2024.

### BACKGROUND

Busway systems are integral to modern power distribution infrastructure, particularly in settings like data centers, industrial facilities, and commercial buildings. These systems facilitate efficient and scalable transmission of electrical power between sources and equipment, where they must remain stable and secure during operation and transportation.

Conventional busway mounting systems rely on multiple components and complex mounting arrangements to hold busways in place. These systems often require significant time and labor for installation, as they use multiple parts for alignment, adjustment, and securing of busway sections. The existing configurations can lead to high manufacturing and installation costs, with frequent adjustments needed to ensure the system remains level and aligned with equipment racks. Furthermore, conventional busway holders lack the flexibility required for three-dimensional (X, Y, and Z direction) adjustments, making it challenging to achieve precise alignment during installation. The need for multidirectional adjustability can be critical, especially when handling busway assemblies that must remain stable during operational stresses, including vibrations and impacts encountered during transport or installation. An additional challenge lies in maintaining stability and durability of the mounting systems, particularly in high-vibration environments, which can impact both the safety and reliability of the mounting systems, and in turn can affect applications such as data centers and industrial applications.

### SUMMARY OF THE INVENTION

In an aspect, a busway holder bracket is provided. The busway holder bracket includes a base member configured to provide foundational support to the busway holder bracket, a longitudinal member extending perpendicularly from the base member to form an upright structural support, a top member extending perpendicularly from the longitudinal member in a direction parallel to the base member, collectively forming a U-shaped configuration with the base member and longitudinal member for supporting busway, wherein the base member is configured to be angularly displaced along a predefined angle to secure the bracket with the busway, and multiple slots configured on the top member, the slots configured to receive adjustable elements fastened by threaded fasteners to allow adjustment and secure positioning of the busway holder bracket on the mounting surface.

In an aspect, the top member is configured to mitigate mechanical stress and vibration-induced forces during transportation and installation.

In an aspect, the busway holder bracket is a single-piece structure.

In yet another aspect, the busway holder bracket is composed of metal or reinforced polymer material.

In an aspect, the base member is angularly displaceable in X (horizontal side-to-side), Y (vertical up-and-down), and Z (depth front-to-back) directions to facilitate alignment and positioning the busway holder bracket with the busway.

In yet another aspect, the busway holder bracket is configured to be disassembled and reassembled by reversing the rotation of the base member, allowing the busway to be repositioned or removed.

Other aspects and advantages of the disclosure will become apparent from the following description, taken in conjunction with the accompanying drawings, illustrating by way of example the principles of the disclosure.

### BRIEF DESCRIPTION OF THE DRAWINGS

The accompanying figures of the drawing, which are included to provide a further understanding of general aspects of the assembly, are incorporated in and constitute a part of this specification. If only the first numerical reference label is used in the specification, the description is applicable to any one of the similar components and/or features having the same first numerical reference label irrespective of the suffix.
FIGS. 1A and 1B illustrate a busway holder bracket of the present disclosure.
FIG. 2 illustrates the positioning of the busway holder bracket of FIG. 1A on the busway.
FIGS. 3A and 3B illustrate the assembling of the busway holder bracket on the busway.

### DETAILED DESCRIPTION

Busway systems are essential in power distribution for settings like data centers and industrial facilities, requiring stable and secure installation. Conventional mounting systems often rely on complex assemblies with multiple components, leading to high installation costs and limited flexibility. These systems typically lack three-dimensional (X, Y, Z direction) adjustability and sufficient vibration resistance, which can be critical for stability and precise alignment under operational stresses. Therefore, there is a need for a busway holder bracket assembly that enhances adjustability, stability, and ease of installation, addressing the limitations of traditional solutions.

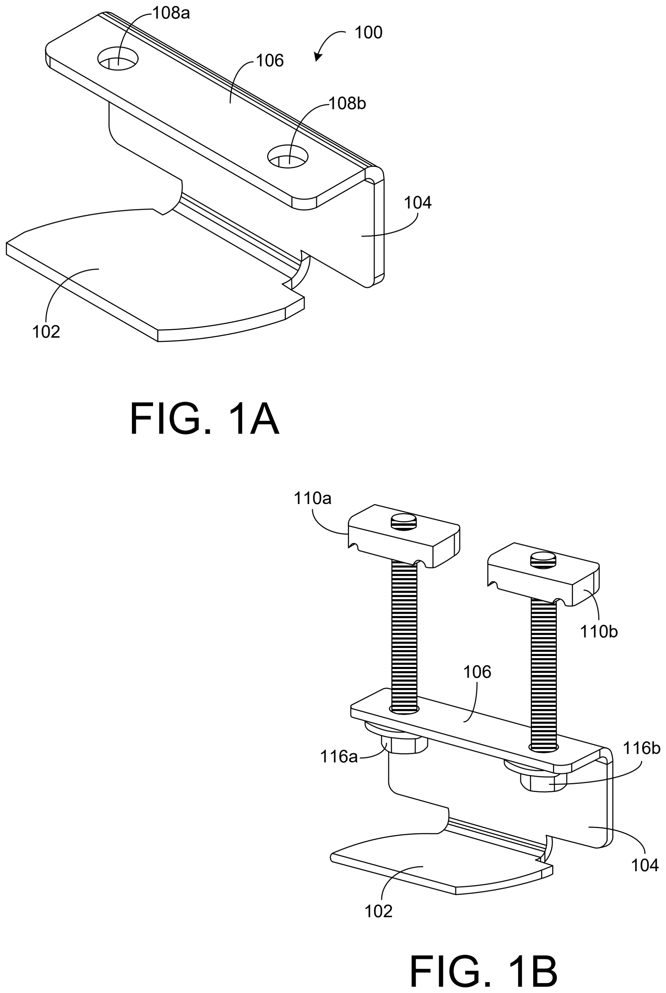

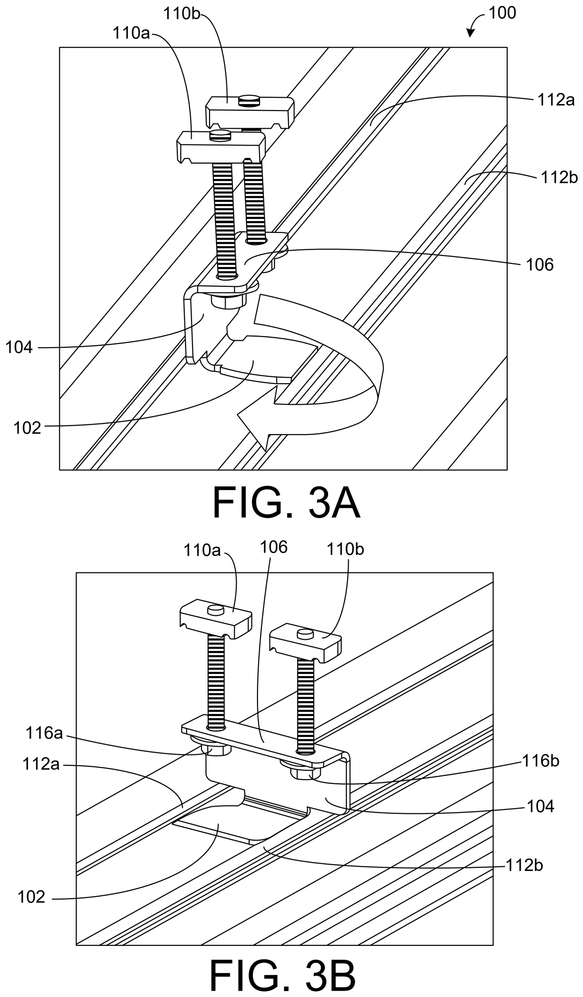

According to the present disclosure, a busway holder bracket 100 is provided for securing a busway including lateral busway members 112a and 112b (as illustrated in FIGS. 3A and 3B, lateral busway members 112a and 112b run in parallel such that a lateral spacing is provided between lateral busway members 112a and 112b) to a mounting surface. The busway holder bracket 100 is described herein with reference to FIGS. 1A to 3B.

FIGS. 1A and 1B illustrate the busway holder bracket 100, according to an embodiment of the present disclosure. The busway holder bracket 100 includes a base member 102, a longitudinal member 104, and a top member 106. The base member 102 is configured to provide foundational support and stability to the busway holder bracket 100. The longitudinal member 104 is configured to extend perpendicularly from the base member 102, forming an upright structural support. In a further embodiment, the top member 106 is configured to extend perpendicularly from the longitudinal member 104, in a direction parallel to the base member 102, thereby forming a U-shaped configuration of the bracket.

In an embodiment, the top member 106 of the busway holder bracket 100 is configured to mitigate mechanical stress induced by vibrations during transportation and installation.

In an embodiment, the top member 106 includes multiple slots 108a, 108b which are configured to receive one or more adjustable elements 110a, 110b. In an embodiment, one or more adjustable elements 110a, 110b can respectively be threaded fasteners 116a, 116b, such as bolts. Further, the adjustable elements 110a, 110b are fastened to the top member 106 using threaded nuts, thereby securing the position of the busway holder bracket 100 and allowing for adjustment as needed.

The slots 108a, 108b, adjustable elements 110a, 110b, and the threaded fasteners 116a, 116b allow the busway holder bracket 100 to be firmly mounted onto the various mounting surfaces with minimal hardware requirements, ensuring ease of installation. This configuration reduces the number of fasteners required, thereby simplifying installation, and allowing for a secure attachment that minimizes movement once the busway holder bracket 100 is mounted.

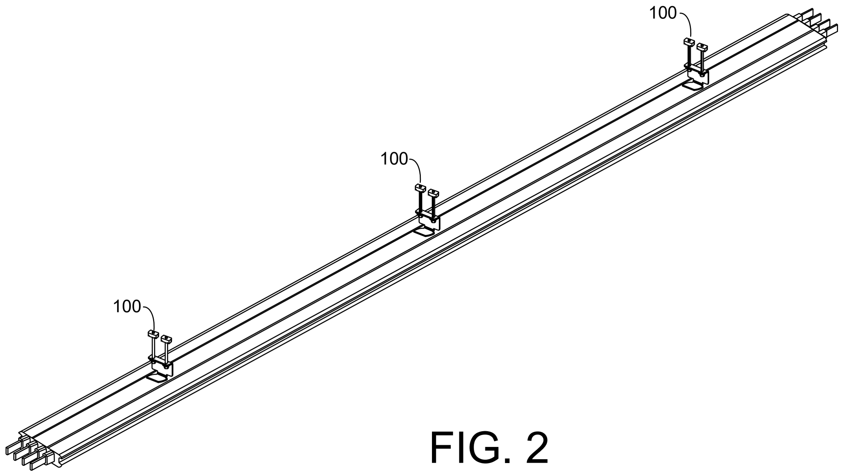

FIG. 2 illustrates the positioning of the busway holder bracket of FIG. 1A on the busway. As illustrated, one or more busway holder brackets 100 are positioned over the lateral busway members 112a and 112b and interposed in a lateral spacing between the lateral busway members 112a and 112b for securing the busway in place.

FIGS. 3A and 3B illustrate the positioning of the busway holder bracket 100 between the lateral busway members 112a and 112b. In an embodiment, upon angular displacement of the busway holder bracket 100, the base member 102 is configured to hook under inner surfaces of the lateral busway members 112a and 112b in direct contact. This contact prevents slippage or movement once the lateral busway members 112a and 112b are locked in place. The base member 102 is configured to be interposed in a lateral spacing between the lateral busway members 112a and 112b, then angularly displaced by approximately 90 degrees to engage with or release the lateral busway members 112a and 112b from guideways configured on the busway. The angular displacement can ensure a quick, secure fit with minimal effort from an installer, and can also reduce the risk of accidental dislodgement during use or transport.

In an embodiment, the busway holder bracket 100 has a compact, single-piece structure for supporting the lateral busway members 112a and 112b, which reduces manufacturing complexity and part count, contributing to cost-effective production and simplified on-site assembly.

In another embodiment, the busway holder bracket 100 is made of durable material, such as metal or reinforced polymer, to provide robust support, allow the bracket 100 to withstand demanding operational environments, and provide the necessary rigidity to support the weight of the lateral busway members 112a and 112b while resisting mechanical stress.

In an embodiment, the top member 106 ensures that the busway holder bracket 100 and the attached lateral busway members 112a and 112b remain stable, even in demanding operational environments subject to significant mechanical or vibrational forces.

In an embodiment, the base member 102 can be angularly displaced in three degrees of freedom, e.g., X (horizontal side-to-side), Y (vertical up-and-down), and Z directions (depth front-to-back) to facilitate on-site alignment and positioning the busway holder bracket 100 with the lateral busway members 112a and 112b.

In an embodiment, the busway holder bracket 100 is configured to align with the standardized configuration of the lateral busway members 112a and 112b, thus enabling easy installation and secure retention with minimal mounting hardware.

In an embodiment, the busway holder bracket 100 is configured to be disassembled and reassembled easily by reversing the rotation of the base member 102, allowing the lateral busway members 112a and 112b to be repositioned or removed with minimal effort.

The present disclosure described herein above has several technical advantages including, but not limited to, a busway holder bracket that can: provide a secure and stable mounting system for busways, ensuring they are fixed in place and properly aligned, which can enhance the safety and reliability of electrical systems; offer versatility in installation, allowing for easy adjustment and compatibility with various busway configurations, reducing the need for customized components, and simplifying installation processes; ensure quick and straightforward assembly with minimal tools required, enabling faster installation and reducing labor costs during construction and maintenance; incorporate durable materials that can withstand harsh industrial environments, such as high temperatures, vibrations, and/or exposure to moisture, thereby improving the holder's longevity and reliability; provide an easy-to-maintain solution with accessible components, enabling efficient maintenance and repair when necessary, which enhances the long-term operational efficiency of the electrical system; and/or offer compatibility with various mounting surfaces, ensuring that the holder can be used in different industrial settings, such as data centers, factories, and/or power distribution units, making it a versatile solution for a wide range of applications.

The methods, systems, devices, graphs, and/or tables discussed herein are examples. Various embodiments may omit, substitute, or add various procedures or components as appropriate. For instance, in alternative embodiments, the methods may be performed in an order different from that described, and/or various stages may be added, omitted, and/or combined. Also, features described with respect to certain embodiments may be combined in various other embodiments. Different aspects and elements of the embodiments may be combined in a similar manner. Also, technology evolves and, thus, many of the elements are examples and do not limit the scope of the disclosure or claims. Additionally, the techniques discussed herein may provide differing results with different types of context awareness classifiers.

Unless defined otherwise, all technical and scientific terms used herein have the same meaning as commonly or conventionally understood. As used herein, the articles "a" and "an" refer to one or to more than one (i.e., to at least one) of the grammatical object of the article. By way of example, "an element" means one element or more than one element. "About" and/or "approximately" as used herein when referring to a measurable value such as an amount, a temporal duration, and the like, encompasses variations of +20% or +10%, +5%, or +0.1% from the specified value, as such variations are appropriate to in the context of the systems, devices, circuits, methods, and other implementations described herein. "Substantially" as used herein when referring to a measurable value such as an amount, a temporal duration, a physical attribute (such as frequency), and the like, also encompasses variations of ±20% or ±10%, ±5%, or ±0.1% from the specified value, as such variations are appropriate to in the context of the systems, devices, circuits, methods, and other implementations described herein.

As used herein, including in the claims, "and" as used in a list of items prefaced by "at least one of" or "one or more of" indicates that any combination of the listed items may be used. For example, a list of "at least one of A, B, and C" includes any of the combinations A or B or C or AB or AC or BC and/or ABC (i.e., A and B and C). Furthermore, to the extent more than one occurrence or use of the items A, B, or C is possible, multiple uses of A, B, and/or C may form part of the contemplated combinations. For example, a list of "at least one of A, B, and C" may also include AA, AAB, AAA, BB, etc.

While illustrative and presently preferred embodiments of the disclosed systems, methods, and/or machine-readable media have been described in detail herein, it is to be understood that the inventive concepts may be otherwise variously embodied and employed, and that the appended claims are intended to be construed to include such variations, except as limited by the prior art. While the principles of the disclosure have been described above in connection with specific apparatuses and methods, it is to be clearly understood that this description is made only by way of example and not as limitation on the scope of the disclosure.

## Claims

1. A busway holder bracket (100) comprising:
a base member (102);
a longitudinal member (104) extending perpendicularly from the base member; and
a top member (106) extending perpendicularly from the longitudinal member in a direction parallel to the base member, collectively forming a U-shaped configuration with the base member and longitudinal member for securing lateral busway members of a busway to a mounting surface; and
a plurality of slots (108) configured on the top member, the slots configured to receive adjustable elements (110) fastened by threaded fasteners (116) to allow adjustment and secure positioning of the busway holder bracket on the mounting surface;
wherein the base member is configured to be interposed in a lateral spacing between the lateral busway members, then angularly displaced along a predefined angle to secure the bracket with the lateral busway members.

2. The busway holder bracket of claim 1, wherein the top member is configured to mitigate mechanical stress and vibration-induced forces during transportation and installation.

3. The busway holder bracket of claim 1 or 2, wherein the busway holder bracket is a single-piece structure.

4. The busway holder bracket of any preceding claim, wherein the busway holder bracket comprises metal or reinforced polymer material.

5. The busway holder bracket of any preceding claim, wherein the base member is angularly displaceable in side-to-side, up-and-down, and front-to-back directions to facilitate alignment and positioning the busway holder bracket with the lateral busway members.

6. The busway holder bracket of any preceding claim, wherein the busway holder bracket is configured to be disassembled and reassembled by reversing the rotation of the base member, allowing the lateral busway members to be repositioned or removed.

7. The busway holder bracket of any preceding claim, wherein securing the bracket with the lateral busway members comprises hooking the base member under inner surfaces of the lateral busway members.
